# FASCICULE DE BREVET EUROPEEN

(11) **EP 0 798 324 B1**
(45) Date de publication et mention de la délivrance du brevet: **14.05.2003**
(21) Numéro de dépôt: 97400570.4
(22) Date de dépôt: 14.03.1997
(51) Int. Cl.: C08G 61/02, C08L 21/00

(54) **Résines novolaques phenol/diene, procédé de préparation et compositions à base de caoutchouc renfermant lesdites résines**
Phenol-Dien-Novolakharze, Verfahren zu ihrer Herstellung und Kautschukmischungen mit diesen Harzen
Phenol-diene novolac resins, process for their preparation and rubber compositions containing said resins

(30) Priorité: 29.03.1996 FR 9603971
(43) Date de publication de la demande: 01.10.1997
(73) Titulaire: CECA S.A., 92800 Puteaux (FR)
(72) Inventeur: Morel-Fourrier, Christophe, 75011 Paris (FR); Dreyfus, Thierry, 95490 Vaureal (FR); Bekhiekh, Messaoud, 60170 Ribecourt (FR)
(74) Mandataire: Treuil, Claude

(56) Documents cités:
- US-A- 4 889 891
- PATENT ABSTRACTS OF JAPAN vol. 011, no. 184 (C-427), 12 Juin 1987 & JP 62 004720 A (SANYO KOKUSAKU PULP CO LTD), 10 Janvier 1987,

## Description

L'invention a pour objet l'utilisation de résines novolaques obtenues par condensation d'un composé aromatique comprenant au moins deux groupes hydroxyles et d'un diène non conjugué, pour améliorer l'adhérence entre le caoutchouc et les matières de renforcement. Plus particulièrement, l'invention concerne des novolaques qui ne présentent substantiellement pas de fumées ou d'hygroscopicité et qui possèdent de bonnes propriétés d'adhérence lorsqu'on les utilise pour vulcaniser du caoutchouc et des matières de renforcement.

Dans le but d'améliorer l'adhérence, il est connu d'incorporer dans le caoutchouc un accepteur de formaldéhyde tel qu'un phénol substitué en méta (par exemple le résorcinol ou un m-aminophénol) et un donneur de formaldéhyde capable de produire du formaldéhyde par chauffage dans le caoutchouc.

Les phénols m-substitués précités sont très volatils. Aussi, lorsqu'ils sont utilisés pour améliorer l'adhérence des caoutchoucs, ils libèrent des fumées nocives à la température de vulcanisation (généralement supérieure à 110°C).

En outre, ces accepteurs de formaldéhyde sont hygroscopiques ce qui entraîne la formation d'efflorescences dans les mélanges de caoutchouc lors du stockage. De telles efflorescences provoquent une adhérence inégale entre le caoutchouc et le matériau de renforcement ce qui nuit à la qualité des articles vulcanisés.

Pour résoudre ces problèmes, on a proposé d'utiliser une "résine de résorcinol" comme accepteur de formaldéhyde, laquelle résine est obtenue par condensation du résorcinol avec le formaldéhyde (Industrial Engeneering Chemistry, pp. 381-386, (1946)).

Bien que la résine permette à la fois d'obtenir une adhésivité importante et une amélioration des propriétés physiques du caoutchouc (dureté et module), elle présente un état de déliquescence tel qu'elle adhère aux matériaux d'emballage ou forme un bloc. Il va de soi que ceci pose beaucoup de problèmes lors du stockage ou de la manipulation. En outre, la résine contient une quantité importante de résorcinol libre (≥ 15 %), ce qui ne permet pas de résoudre les inconvénients liés à la présence de fumées et au mottage.

Dans EP-A-419 741 et DE-A-4 001 606, on a proposé d'utiliser des novolaques modifiées résultant de la co-condensation d'un phénol (par exemple le résorcinol), d'un hydrocarbure insaturé (par exemple le styrène) et d'un aldéhyde (par exemple le formaldéhyde).

On a aussi proposé des produits ternaires de co-condensation d'un phénol tel que le résorcinol, d'un alkylphénol et d'un aldéhyde. Par exemple, dans FR 2 193 046, FR 2 223 391, FR 2 392 049 et EP-A-602 861, lesdits produits sont obtenus par condensation d'un résol (alkylphénol/formol) avec le résorcinol en présence d'un catalyseur acide.

Dans US 5 030 692, on décrit la synthèse d'un composé ternaire par condensation de résorcinol avec un résol obtenu par réaction d'un alkylphénol et de méthylformcel ou de furfural en milieu acide.

Dans les produits ternaires qui viennent d'être cités, si le taux de résorcinol libre est certes faible (< 5 %), il s'accompagne toutefois d'une perte de la réactivité vis-à-vis du donneur de formaldéhyde.

Dans JP-62004720, on décrit des résines novolaques obtenues par condensation d'un excès de résorcinol et de dicyclopentadiène (rapport molaire résorcinol/dicyclopentadiène = 2,9), le résorcinol en excès étant éliminé en fin de réaction par exemple par distillation sous pression réduite ou précipitation fractionnée. Ces résines ont des propriétés de résistance à la chaleur et une flexibilité améliorées recherchées dans le domaine de l'électronique.

En dépit des divulgations de l'art antérieur, il persiste un besoin d'obtenir des résines qui ne produisent pas de fumées, pas de mottage et s'avèrent aussi réactives que les résines résorcinol/formol lors de la vulcanisation du caoutchouc.

La présente invention a pour objet l'utilisation de résines novolaques obtenues par condensation (A) d'un composé aromatique comprenant au moins deux groupes hydroxyles et (B) d'un diène non conjugué, dans un rapport molaire (A)/(B) compris entre 0,7 et 1,75 en présence d'un catalyseur acide, et éventuellement à distiller lesdites résines présentant une teneur en composé aromatique libre inférieure à 5 % en poids.

Un autre objet de l'invention concerne encore des compositions à base de caoutchouc contenant les résines précitées.

Un autre objet de l'invention concerne enfin l'utilisation de ces résines en tant qu'agent "d'adhérisation" améliorant l'adhérence du caoutchouc sur des matériaux de renforcement.

D'autres objets et avantages de l'invention apparaîtront à la lumière de la description suivante.

Les résines novolaques selon l'invention sont obtenues par condensation (A) d'un composé aromatique comprenant au moins deux groupes hydroxyles et (B) d'un diène non conjugué dans un rapport molaire (A)/(B) compris entre 0,7 et 1,75 en présence d'un catalyseur acide.

Le composé aromatique est généralement choisi parmi les composés monoaromatiques tels que le résorcinol, le pyrocatéchol, l'hydroquinone, le pyrogallol et le phoroglucinol, et les composés de formule : 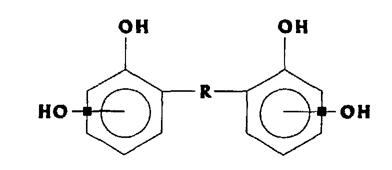 dans laquelle R représente un radical alkylène ou arylalkylène renfermant 1 à 12 atomes de carbone.

Le composé aromatique peut être constitué d'un seul ou de plusieurs des composés précités. De préférence, on utilise le résorcinol.

Le composé aromatique peut contenir, en outre, jusqu'à 25 % en mole d'au moins un autre phénol, substitué ou non, par exemple choisi parmi les alkylphénols dont le radical alkyle renferme de 1 à 14 atomes de carbone et l'huile de cachou.

Le diène non conjugué selon l'invention est généralement choisi parmi les adducts obtenus par réaction de Diels-Alder à partir d'au moins deux diènes conjugués tels que le butadiène, l'isoprène, le pipérylène, le cyclopentadiène et le méthylcyclopentadiène. A titre d'exemple de tels composés, on peut citer le dicyclopentadiène, le dimétyldicyclopentadiène, le dipentène, le norbornadiène, les oligomères et cooligomères des diènes conjugués précités, et les mélanges de ces composés.

De préférence, on utilise les diènes non conjugués renfermant de 8 à 25 atomes de carbone.

De manière avantageuse, on utilise un diène comprenant de 75 à 100 % en poids d'au moins un dimère tel que le dicyclopentadiène et 0 à 25 % en poids d'au moins un autre dimère, codimère, trimère et/ou cotrimère.

Mieux encore, le diène comprend 75 % en poids de dicyclopentadiène et 25 % en poids d'au moins un codimère choisi parmi le cyclopentadiène-pipérylène, cyclopentadiène-isoprène et cyclopentadiène-méthylcyclopentadiène.

Le diène non conjugué peut contenir, en outre, jusqu'à 25 % en mole d'au moins un composé choisi parmi les oléfines aliphatiques, par exemple le diisobutylène, l'isobutylène ou l'amylène, les oléfines ramifiées renfermant un radical alkyle, aryle ou alkylaryle en C₆-C₁₄, par exemple le styrène, l'alphaméthylstyrène ou le vinyltoluène.

Le catalyseur acide est généralement choisi parmi les acides de type Lewis tels que les acides alkylsulfoniques, arylsulfoniques, alkylarylsulfoniques, phénolsulfoniques, alkylphénolsulfoniques, aryldisulfoniques et les mélanges de ces acides, BF₃ gazeux ou sous la forme de complexes avec un phénol, un alcool ou un acide notamment acétique.

On peut aussi utiliser un catalyseur acide choisi parmi les acides de Friedel et Crafts tel que l'acide sulfurique.

La quantité d'acide mise en oeuvre est généralement comprise entre 0,5 et 5% en poids par rapport au poids des réactifs (A) et (B).

Le rapport molaire du composé (A) au composé (B) est préférentiellement compris entre 0,75 et 1,25. Lorsque le rapport molaire est inférieur à 0,7, on observe généralement une gélification de la résine.

La condensation des composés (A) et (B) en présence du catalyseur est réalisée à une température pouvant varier de 50 à 130°C. De manière à contrôler l'exotherme de la réaction, on préfère opérer à reflux des composés volatils, et éventuellement en présence d'un solvant, notamment d'un hydrocarbure aromatique tel que le toluène et le xylène, ou aliphatique tel que l'hexane.

Dans une variante préférée, on introduit en continu le composé (B) dans le mélange constitué par le composé (A) et le catalyseur, et éventuellement le solvant.

A l'issue de la réaction, on récupère la résine novolaque, éventuellement après une étape de distillation, de préférence sous vide, par exemple entre 30 et 100 mm de Hg et à 200°C. La résine, généralement de couleur noire, rouge ou violette, présente un point de fusion Bille et Anneau (norme NFT 76106) compris entre 80 et 130°C, et de préférence 90 et 110°C et une teneur en composé aromatique libre inférieure à 5 %, et de préférence 1 %. En outre, ladite résine ne présente pas de problème de mottage lorsqu'elle est placée en atmosphère humide.

Les résines obtenues selon le procédé décrit ci-avant conservent, de manière inattendue, les groupes hydroxyles du composé aromatique de départ permettant une bonne réactivité avec le donneur de formol. Ceci ne fait pas partie de l'art antérieur qui enseigne la formation des résines novolaques à base de dicyclopentadiène et d'un phénol par des réactions de O-alkylation (voir CA 101(6):38928a, 1984).

Les résines novolaques s'avèrent particulièrement efficaces pour améliorer l'adhésion du caoutchouc sur les matériaux de renforcement tels que les fibres organiques notamment à base de nylon, de rayonne, de polyesters, de polyamides ou d'aramides, et les câblés métalliques à base d'acier notamment laitonné ou zingué.

Les résines peuvent être avantageusement incorporées dans des compositions à base de caoutchouc. De telles compostions sont caractérisées en ce qu'elles comprennent de 0,5 à 20 parties en poids, et de préférence de 1 à 10 parties en poids, desdites résines pour 100 parties en poids de caoutchouc.

Le caoutchouc est généralement choisi parmi le caoutchouc naturel, les copolymères styrène-butadiène, le polybutadiène, les copolymères butadiène-acrylonitrile et leurs dérivés hydrogénés, le polychloroprène, le caoutchouc butyle ou butyle halogéné, le polyisoprène et les mélanges de deux ou plusieurs de ces composés.

Les compositions précitées sont généralement réticulées au moyen d'un donneur de formaldéhyde connu dans le domaine. A titre d'exemples, on peut citer l'hexaméthoxyméthylolmélamine, avantageusement adsorbée sur de la silice, et l'hexaméthylènetétramine. Le donneur de formol est généralement utilisé à raison de 0,5 à 10 parties en poids, et de préférence 1 et 5 parties en poids, pour 100 parties en poids de caoutchouc.

Les compositions précitées peuvent, en outre, contenir divers additifs, notamment (en parties en poids pour 100 parties en poids de caoutchouc) :
- des charges renforçantes inorganiques telles que le noir de carbone (20-120 parties), la silice (3-50 parties), le carbonate de calcium et les mélanges noir/silice,
- des accélérateurs, des catalyseurs et/ou des retardateurs de la vulcanisation,
- des antioxydants, des antiozonants et/ou des antidégradants pour stabiliser les compositions,
- des peptiseurs, des huiles dites "de process", des résines tackifiantes, des lubrifiants et/ou des plastifiants pour la mise en oeuvre du compoundage,
- et des co-agents d"'adhérisation" tels que les sels organiques de cobalt, les sels complexes de cobalt et bore et les oxydes de plomb destinés à améliorer l'adhésion du caoutchouc sur les câblés métalliques. En général, on utilise de 0,1 à 5 parties calculées sur la base du cobalt ou du plomb.

Les conditions de vulcanisation dépendent de la nature du caoutchouc et des additifs de compoundage. Ces conditions, en elles-mêmes, ne sont pas critiques et font partie des connaissances générales de l'homme du métier.

Ces compositions peuvent être avantageusement mises en oeuvre pour la fabrication de pneumatiques et de bandes transporteuses vulcanisés.

Les exemples qui suivent permettent d'illustrer l'invention.

### EXEMPLE 1

Dans un ballon tricol de deux litres muni d'un dispositif d'agitation et d'un réfrigérant, on introduit 30g de toluène et 150g de résorcinol (INDSPEC). On chauffe le ballon à 100°C et on ajoute 1 g d'acide sulfurique à 96 % (soit 0,66 % en poids par rapport au résorcinol). On coule, en une heure, 239 g d'un mélange renfermant 75 % en poids de dicyclopentadiène et 25 % en poids de codimères obtenus par réaction de Diels-Alder à partir de cyclopentadiène et de dioléfines en C₄-C₆ (Grade Résine; Dow). Le rapport molaire résorcinol/diène est égal à 0,75.

On observe un exotherme : la température augmente jusqu'à 125°C, pour redescendre à 110°C en fin de coulée. Le mélange réactionnel devient rouge. On porte alors le mélange à 120-130°C pendant 2 heures.

La résine obtenue présente un point de fusion Bille et Anneau égal à 85°C et une teneur en résorcinol libre égale à 2,6 % en poids. Après neutralisation du mélange par l'ajout de 1,7 g de triéthanolamine, on place le réfrigérant en position de distillation et on distille jusqu'à 200 °C sous un vide de 30 mm de Hg. On récupère 35 g de distillat et 385 g d'une résine présentant un point de fusion Bille et Anneau égal à 108°C et contenant 2 % en poids de résorcinol libre. L'analyse de la résine par chromatographie par perméation de gel (gel : Shodex H 2002 ; éluant: THF; détection : réfractométrie différentielle ; étalonnage : polystyrène) indique une masse moléculaire en poids égale à 944 et un indice de polydispersité de 1,84.

### EXEMPLE 2

Dans le dispositif de l'exemple 1, on introduit 30g de toluène et 150 g de résorcinol (INDSPEC). On chauffe le ballon à 100°C et on ajoute 4,5 g de BF₃ complexé avec de l'acide acétique (soit 3 % en poids de BF₃ par rapport au résorcinol). On coule, en 30 minutes, 180 g d'un mélange renfermant 75 % en poids de dicyclopentadiène et 25 % en poids de codimères obtenus par réaction de Diels-Alder à partir de cyclopentadiène et de dioléfines en C₄-C₆ (Grade Résine; Dow). Le rapport molaire résorcinol/diène est égal à 1.

On porte le mélange obtenu à 120-130°C pendant 5 heures. On place le réfrigérant en position de distillation et on distille le mélange réactionnel à 150°C sous un vide de 10 mm de Hg. On récupère 315 g d'une résine noire présentant un point de fusion Bille et Anneau égal à 104°C et qui contient 3,8 % en poids de résorcinol libre.

Le spectre infrarouge d'une pastille en KBr contenant 10 % en poids de la résine obtenue présente une bande d'absorption intense caractéristique de la fonction hydroxyle, ainsi qu'une bande à 3041 cm⁻¹ attribuable à des liaisons éthyléniques. L'analyse chromatographique par perméation de gel (conditions de l'exemple 1) indique une masse molaire en poids égale à 757.

### EXEMPLE 3

Dans le dispositif de l'exemple 1, on introduit 39 g de toluène et 195 g de résorcinol (INDSPEC). On chauffe le ballon à 100°C et on ajoute 1,3 g d'acide sulfurique à 96 % (soit 0,66 % en poids par rapport au résorcinol). On coule 234 g de dicyclopentadiène (PROLABO) en une heure. Le rapport molaire résorcinol/dicyclopentadiène est égal à 1.

On observe un exotherme : la température augmente jusqu'à 128°C, pour redescendre à 120°C en fin de coulée. Le mélange réactionnel devient rouge. On porte alors le mélange à 120-130°C pendant 2 heures.

Après neutralisation du mélange par l'ajout de 1,9 g de triéthanolamine, on place le réfrigérant en position de distillation et on distille jusqu'à 200°C sous un vide de 30 mm de Hg. On récupère environ 36 g de distillat et 424 g d'une résine présentant un point de fusion Bille et Anneau égal à 144°C et contenant 4,3 % en poids de résorcinol libre.

Cette résine mélangée à 10 % en poids d'hexamethylènetétramine présente une temps de réticulation sur plaque chauffante à 150°C égal à 100 secondes (Norme NF T51 428).

### EXEMPLE 4

Dans le dispositif de l'exemple 1, on introduit 40 g de toluène et 195 g de pyrocatéchol (PROLABO). On chauffe à 100°C et on ajoute 2,6 g d'acide sulfurique à 96 % (soit 1,33 % en poids par rapport au pyrocatéchol). On coule 234 g de dicyclopentadiène (PROLABO) en une heure. Le rapport molaire pyrocatéchol/dicyclopentadiène est égal à 1.

On observe un exotherme : la température augmente jusqu'à 132°C, pour redescendre à 124°C en fin de coulée. Le mélange réactionnel devient violet. On porte alors le mélange à 120-130°C pendant 2 heures.

Après neutralisation du mélange par addition de 3,7 g de triéthanolamine, on place le réfrigérant en position de distillation et on distille jusqu'à 200°C sous un vide de 30 mm de Hg. On récupère environ 36 g de distillat et 429 g d'une résine noirâtre présentant un point de fusion Bille et Anneau égal à 124°C et contenant 4,5 % en poids de pyrocatéchol libre.

Le spectre infrarouge d'une pastille en KBr contenant 10 % en poids de la résine obtenue présente une bande intense à 3442 cm⁻¹ caractéristique de la fonction hydroxyle.

Cette résine mélangée à 10 % en poids d'hexamethylènetétramine présente une temps de réticulation sur plaque chauffante à 150°C égal à 110 secondes (Norme NF T51 428).

### EXEMPLE 5 (COMPARATIF)

Dans le dispositif de l'exemple 1, on introduit 200g de phénol (pureté > 99,85 %) que l'on porte à 100°C. On ajoute 4 g d'une solution à 50 % en poids d'acide octylphénolsulfonique dans le xylène (soit 1% en poids par rapport au phénol). On coule, en une heure, 188 g d'un mélange renfermant 75 % en poids de dicyclopentadiène et 25 % en poids de codimères obtenus par réaction de Diels-Alder à partir de cyclopentadiène et de dioléfines en C₄-C₆ (Grade Résine; Dow). Le rapport molaire phénol/diène est égal à 1,5.

On porte le mélange à 100-110°C pendant 5 heures. A l'issue de la réaction, on récupère une résine noire liquide contenant 22 % en poids de phénol libre que l'on chromatographie sur colonne de silice (gradient tétrahydrofuranne/hexane 10/90 à 20/10; v/v). On récupère 150 g d'un composé dont on réalise l'analyse par ¹H RMN (200 MHz) :

| *Type de proton* | *Déplacement chimique* *(ppm)* | *Nombre de proton* *(par intégration)* |
|---|---|---|
| aromatique | 6,87 et 7,25 | 5 |
| vinylique | 5,45 et 5,7 | 2 |
| éther (CH-O) | 4,2 1 | 1 |
| aliphatique | 1,29-2,59 | 12 |

Le spectre ¹H RMN de ce composé indique la présence de liaisons éther résultant de la condensation par O-alkylation d'une molécule de phénol et d'une molécule de dicyclopentadiène.

### EXEMPLE 6 (COMPARATIF)

Dans le dispositif de l'exemple 1, on introduit 100 g de phénol (pureté > 99,85 %) que l'on porte à 100°C. On introduit 2 g de BF₃ complexé avec de l'acide acétique (soit 2 % en poids par rapport au phénol). On coule, en une heure, 188 g d'un mélange renfermant 75 % en poids de dicyclopentadiène et 25 % en poids de codimères obtenus par réaction de Diels-Alder à partir de cyclopentadiène et de dioléfines en C₄-C₆ (Grade Résine; Dow). Le rapport molaire phénol/diène est égal à 0,75.

On porte le mélange à 120-130°C pendant 5 heures. On place le réfrigérant en position de distillation et on distille le mélange jusqu'à 200°C sous un vide de 10 mm de Hg. On récupère 252 de résine noire molle (point de fusion Bille et Anneau = 54°C) ne contenant pas de phénol libre. Le spectre ¹H RMN de cette résine est similaire à celui de la résine selon l'exemple 5 et présente, en outre, un signal à 4,75 ppm correspondant à un proton mobile. Ce signal, qui disparaît par addition d'acide trifluoroacétique, est attribué au proton de fonctions hydroxyles.

### EXEMPLE 7 (COMPARATIF)

On opère dans les conditions de l'exemple 6 modifié en ce que l'on utilise 94 g du mélange à base de dicyclopentadiène (Grade Résine; Dow), soit un rapport molaire phénol/diène égal à 1,5. On obtient une résine noire molle contenant moins de 1 % de phénol libre.

100 parties en poids de la résine ainsi obtenue et 10 parties en poids d'hexaméthylènetétramine sont mélangées et chauffées à 170°C pendant 25 minutes. On constate que le mélange reste liquide et que sa viscosité n'est pas augmentée.

On en conclut que la présence d'éthers phénoliques dans la résine ne permet pas la réaction avec le donneur de formol.

A titre de comparaison, un mélange comprenant 100 parties en poids de résine novolaque phénol/formol (R7515; CECA S.A.; rapport molaire phénol/formol : 1,5; teneur en phénol libre : 1 %) et 10 parties en poids d'hexaméthylènetétramine réticule en moins de 2 minutes à 170°C.

### EXEMPLES D'APPLICATION

Dans tous les exemples, on effectue les mesures suivantes :

### 1) Propriétés rhéologiques

- "Mooney Scorch time" (min.) mesuré à 120°C avec un viscosimètre Monsanto MV 2000E selon méthode ISO 289 1,
- Viscosité Mooney (ml) mesurée à 100°C avec un viscosimètre Monsanto MV 2000E selon méthode ISO 289 1,
- Courbe rhéologique réalisée à 150°C avec un rhéomètre MDR 2000, 1° Arc selon méthode ISO 289 2. On mesure les caractéristiques de pré-vulcanisation :
   - T95 : temps (min.) pour obtenir 95 % de la force maximum
   - Tangente δ mesurée à T95
   - N max. : force maximale (dNm)

### 2) Propriétés mécaniques selon ISO37, DIN 53 505 à 150°C

- Module à 300 % (MPa)
- Module d'élongation (MPa)
- Elongation maximum (%)
- Dureté Shore A

Les propriétés précitées sont mesurées : a) pour une vulcanisation optimum à 150°C, et b) pour une survulcanisation de 100 minutes à 150°C.
- Propriétés mécaniques après vieillissement selon ISO 188 après 72 heures à 70°C ou 72 heures à 100°C
   - Module d'élongation (MPa)
   - Elongation maximum (%)
   - Dureté Shore A
- Résistance au cisaillement (kN/m) à 90°C selon ISO 34 méthode B, les pièces étant vulcanisées au temps optimum à 150°C.

### 3) Propriétés d'adhérence caoutchouc/câblés acier

### A) Adhérence sur câblés acier laitonné (application pneumatique)

### • Selon ISO 5603

L'adhérence du caoutchouc sur des câblés en acier laitonné simple constitué de 4 fils de diamètre 0,28 mm (4*0,28), ou complexe constitué d'un fil central de diamètre 0,15 mm et 7 torons périphériques comprenant 4 fils de 0,22 mm de diamètre (7*4*0,22+1*0,15) est mesurée dans les conditions de vulcanisation et vieillissement suivantes :
- Temps de vulcanisation : optimum + 5 minutes
- Temps de vulcanisation : optimum + 5 minutes et vieillissement 10 jours à 75°C et 90 % d'humidité
- Temps de vulcanisation : optimum + 5 minutes et vieillissement 24 heures à 90°C dans une solution aqueuse de NaCI à 5 % en poids (pour les câblés 7*4*0,22+1*0,15 uniquement)
- Survulcanisation : 150 minutes à 150°C

### • Selon la méthode Henley (Norme CSN 62 1464)

L'adhérence du caoutchouc sur les câblés est mesurée avant et après sollicitation mécanique alternée (24 heures à 80°C pour un angle de 45° avec une fréquence de 7,5 Hz).

### B) Adhérence sur câblés acier zingué (application bande transporteuse)

L'adhérence du caoutchouc sur un câblé zingué de 2,8 mm de diamètre constitué de 7 torons périphériques comprenant 7 fils de diamètre 0,31 mm (7*7*0,31) est mesurée dans les conditions de vulcanisation et vieillissement suivantes :
- Temps de vulcanisation : optimum + 5 minutes
- Temps de vulcanisation : optimum + 5 minutes et vieillissement 150 minutes à 145°C.

### EXEMPLES 8 A 11

Adhérence sur câblés acier laitonné, application aux pneumatiques.

On utilise le mélange de caoutchouc de composition suivante :

| | *Parties en poids* |
|---|---|
| 1 - Caoutchouc naturel RSS-1 prémastiqué | 100 |
| 2 - Noir de carbone N-326 | 60 |
| 3 - Oxyde de zinc | 6 |
| 4 - Acide stéarique | 0,6 |
| 5 - Huile naphténique (ENERFLEX 65 ; BP) | 6 |
| 6 - Silice précipitée (Ultrasil VN3; DEGUSSA) | 5 |
| 7 - Triméthyl-2,2,4-dianhydro-1,2-quinoléine polymérisée (TMQ-FLECTOL ; MONSANTO) | 2 |
| 8 - Résine tackifiante (R7510; CECA) | 1 |
| 9 - Soufre insoluble (Crystex OT 20A ; KALI CHEMIE) | 5,5 |
| 10 - N,N'-dicyclohexyl-2-benzothiazylsulfénamide (Vulkacit DZ DCBS) | 1 |
| 11 - Hexaméthoxyméthylolmélamine adsorbée sur silice à 65 % de matière active (R7234; CECA) | 2 |
| 12 - Résine d'''adhérisation''* | 2 |

| | |
|---|---|
| * Témoin sans résine (exemple 8; comparatif) Résine résorcinol/formol Penacolite B20S; INDSPEC (exemple 9; comparatif) Résorcinol (exemple 10; comparatif) Résine obtenue selon l'exemple 1 (exemple 11). | |

Dans un mélangeur interne type Banbury, on introduit les constituants suivants : 1 (au temps t), la moitié en poids de 2 et 5 (à t+1 min.), le reste de 2, 6 et 12 (à t+2 min.), 3, 7, 4, et 8 (à t+3 min.). On décharge le mélange à t+5 min.

Sur un mélangeur externe bi-cylindre (roll-mill), on introduit les constituants suivants : le mélange obtenu précédemment (au temps t), 11 (à t+1 min.), 10 (à t+2 min.) et 9 (à t+3 min.). Le mélange ainsi obtenu (à t+6 min.) est homogénéisé en 12 passes et déchargé (à t+10 min.).

Les résultats sont rassemblés dans les tableaux suivants :

| | **Exemple 8 (comparatif)** | **Exemple 9 (comparatif)** | **Exemple 10 (comparatif)** | **Exemple 11** |
|---|---|---|---|---|
| **1) Propriétés rhéologiques** | | | | |
| Mooney Scorch time (min.) | 22,42 | 26,24 | 20,16 | 26,2 |
| Viscosité Mooney (ml) | 77,3 | 75,0 | 74,1 | 81,3 |
| T95 (min.) | 30,80 | 32,44 | 22,57 | 35,82 |
| Tangente δ | 0,079 | 0,097 | 0,093 | 0,087 |
| N max. (dNm) | 21,84 | 24,24 | 24,57 | 23,72 |
| **2) Propriétés mécaniques** | | | | |
| **Vulcanisation optimum à 150°C** | | | | |
| Module d'élongation (MPa) | 21,15 | 20,80 | 21,70 | 22,70 |
| Module à 300 % (MPa) | 10,25 | 10,91 | 10,60 | 12,03 |
| Elongation maximale (%) | 543 | 524 | 534 | 526 |
| Dureté Shore A | 68,5 | 75,6 | 75,5 | 75,0 |
| Cisaillement à 20°C (KN/m) | 93 | 87 | 92 | 81 |
| Cisaillement à 90°C (KN/m) | 57 | 62 | 60 | 62 |
| **Survulcanisation 100 min, à 150°C** | | | | |
| Module d'élongation (MPa) | 21,5 | 21,0 | 20,9 | 21,4 |
| Elongation maximale (%) | 454 | 409 | 424 | 446 |
| Module à 300 % (MPa) | 13,96 | 15,91 | 14,92 | 14,35 |
| Dureté Shore A | 75 | 81 | 78 | 79 |
| **Vieillissement 72 heures à 70°C** | | | | |
| Module d'élongation (MPa) | 24,80 | 23,30 | 24,60 | 23,45 |
| Elongation maximale (%) | 493 | 477 | 468 | 484 |
| Dureté Shore A | 71 | 76 | 72 | 76 |
| **Vieillissement 72 heures à 100°C** | | | | |
| Module d'élongation (MPa) | 6,59 | 6,51 | 7,86 | 6,36 |
| Elongation maximale (%) | 109 | 113 | 118 | 95 |
| Dureté Shore A | 79 | 79 | 80 | 80 |
| **3) Propriétés d'adhérence** | | | | |
| **Norme ISO 5603** | | | | |
| **Cablés 4*0,28 (N/cm)** | | | | |
| Vulcanisation optimum + 5 min. | 281 | 318 | 298 | 296 |
| Après vieillissement 10 jours à 75°C et 90 % d'humidité | 320 | 243 | 277 | 308 |
| Survulcanisation 150 min. à 150°C | 337 | 347 | 301 | 355 |
| **Câblés 7*4*0,22 +1*0,15 (N/2,5 cm)** | | | | |
| Vulcanisation optimum + 5 min. | 810 | 876 | 972 | 931 |
| Après vieillissement 10 jours à 75°C et 90% d'humidité | 1242 | 1172 | 1078 | 1207 |
| Après vieillissement 24 heures à 90°C dans solution NaCI 5 % | 618 | 447 | 523 | 465 |
| Survulcanisation 150 min. à 150°C | 953 | 1084 | 1066 | 1170 |
| **Norme CSN 62 1464** | | | | |
| **Cablés 4*0,28** | | | | |
| Vulcanisation optimum + 5 min. | | | | |
| Avant déformation alternée (N) | 191,8 | 254,5 | 216,7 | 268,6 |
| Après déformation alternée (N) | 158,5 | 202,0 | 183,1 | 207,8 |
| Perte (%) | 17,3 | 20,6 | 15,5 | 22,6 |
| Survulcanisation 150 min. à 150°C | | | | |
| Avant déformation alternée (N) | 224,5 | 286,3 | 249,8 | 232,2 |
| Après déformation alternée (N) | 189,5 | 251,8 | 220,8 | 226,3 |
| Perte (%) | 15,6 | 12,1 | 11,8 | 2,6 |
| **Câblés 7*4*0,22 +1*0,15** | | | | |
| Vulcanisation optimum + 5 min. | | | | |
| Avant déformation alternée (N) | 315,3 | 332,3 | 351,8 | 344,2 |
| Après déformation alternée (N) | 283,5 | 296,5 | 306,0 | 304,5 |
| Perte (%) | 10,1 | 10,8 | 13,0 | 11,5 |
| Survulcanisation 150 min. à 150°C | | | | |
| Avant déformation alternée (N) | 328,6 | 379,6 | 338,0 | 314,2 |
| Après déformation alternée (N) | 291,5 | 330,0 | 304,8 | 308,5 |
| Perte (%) | 11,3 | 4,4 | 9,8 | 1,8 |

### EXEMPLES 12 A 15

Adhérence sur câblés acier zingué, application aux bandes transporteuses.

On utilise le mélange de caoutchouc de composition suivante :

| | Parties en poids |
|---|---|
| 1- Caoutchouc naturel SMR-GP | 42 |
| 2- Caoutchouc synthétique SBR 1500 | 31,2 |
| 3 - Caoutchouc polybutadiène SKD | 26,8 |
| 4 - Noir de carbone N-330 | 40 |
| 5 - Oxyde de zinc | 17 |
| 6 - Acide stéarique | 0,6 |
| 7 - Huile Naphténique (ENERFLEX 65 ; BP) | 5,5 |
| 8 - Silice précipitée (Ultrasil VN3; DEGUSSA) | 9 |
| 9 - Triméthyl-2,2,4-dianhydro-1,2-quinoléine polymérisée (TMQ-FLECTOL ; MONSANTO) | 1 |
| 10 - Soufre insoluble (Crystex OT 20A ; KALI CHEMIE) | 4 |
| 11 - N-cyclohexyl-2-benzothiazylsulfenamide (SULFENAX ; ISTROCHEM) | 0,8 |
| 12 - Antiozonant (Santoflex 13; MONSANTO) | 1,8 |
| 13 - Oxyde de plomb (Rhenogran PbO 80; RHEINCHEMIE) | 1,8 |
| 14 - Antidégradant (Santogard PVI; MONSANTO) | 0,13 |
| 15 - Naphténate de cobalt (SERVO) | 4,5 |
| 16 - Hexamétoxyméthylolmélamine adsorbée sur silice à 65 % de matière active (R7234; CECA) | 2,7 |
| 17 - Résine d'''adhérisation"* | 3 |

| | |
|---|---|
| * Témoin sans résine (exemple 12; comparatif) Résine résorcinol/formol (Penacolite B20S; INDSPEC) (exemple 13; comparatif) Résorcinol (exemple 14; comparatif) Résine obtenue selon l'exemple 1(exemple 15) | |

Dans un mélangeur interne type Banbury, on introduit les constituants suivants : 1 et 2 (au temps t=0), les 2/3 en poids de 4 (à t+1 min.), les 2/3 en poids de 5 (à t+2 min.), on décharge le mélange A obtenu (à t+4 min.) et on le laisse refroidir.

Dans le mélangeur précité, on introduit le mélange A et les constituants suivants : 3 (au temps t=0), le complément de 4, 8 et 7 (à t+1 min.), le complément de 5 et 17 (à t+2 min.), 15, 9, 12, 13 et 6 (à t+3 min.) et on décharge le mélange B obtenu (à t+5 min.).

Sur un mélangeur externe bi-cylindre (roll-mill), on introduit le mélange B (au temps t=0) et les constituants suivants : 11 (à t+1 min.), 16 (à t+2 min.) 10 et 14 (à t+3 min.). A t+6 minutes, on décharge le mélange. On homogénéise le mélange ainsi obtenu et on le décharge après 10 minutes de mélange.

Les résultats sont rassemblés dans les tableaux suivants :

| | **Exemple 12 (comparatif)** | **Exemple 13 (comparatif)** | **Exemple 14 (comparatif)** | **Exemple 15** |
|---|---|---|---|---|
| **1) Propriétés rhéologiques** | | | | |
| Mooney Scorch time (min.) | 48,7 | 33,0 | 22,3 | 44,6 |
| Viscosité Mooney (ml) | 52,8 | 56,5 | 53,6 | 57,0 |
| T95 (min.) | 14,68 | 15,70 | 15,45 | 15,37 |
| Tangente δ | 0,038 | 0,066 | 0,077 | 0,064 |
| N max. (dNm) | 23,37 | 25,98 | 28,51 | 25,36 |
| **2) Propriétés mécaniques** | | | | |
| **Vulcanisation optimum à 150°C** | | | | |
| Module d'élongation (MPa) | 15,54 | 17,40 | 17,83 | 16,88 |
| Module à 300 % (MPa) | 11,43 | 11,81 | 12,12 | 11,77 |
| Elongation maximale (%) | 381 | 415 | 420 | 418 |
| Dureté Shore A | 69,0 | 73,0 | 73,5 | 73,0 |
| Cisaillement à 20°C (KN/m) | 35,3 | 36,1 | 40,9 | 38,3 |
| Cisaillement à 90°C (KN/m) | 24,0 | 26,5 | 28,5 | 21,3 |
| **Survulcanisation 100 min à 150°C** | | | | |
| Module d'élongation (MPa) | 16,34 | 16,07 | 15,87 | 15,15 |
| Elongation maximale (%) | 449 | 398 | 400 | 368 |
| Module à 300 % (MPa) | 9,81 | 11,55 | 11,48 | 11,40 |
| Dureté Shore A | 70,0 | 74,5 | 74,5 | 73,5 |
| **Vieillissement 72 heures à 70°C** | | | | |
| Module d'élongation (MPa) | 15,53 | 14,82 | 15,56 | 17,17 |
| Elongation maximale (%) | 299 | 293 | 327 | 338 |
| Dureté Shore A | 74,0 | 77,5 | 77,0 | 77,0 |
| **Vieillissement 72 heures à 100°C** | | | | |
| Module d'élongation (MPa) | 10,54 | 11,31 | 11,64 | 11,39 |
| Elongation maximale (%) | 117 | 130 | 132 | 126 |
| Dureté Shore A | 75 | 85 | 84 | 84 |
| **3) Propriétés d'adhérence sur câblés 7*7*0,31 diamètre 2,8** | | | | |
| Vulcanisation optimum + 5 min. (N/50 mm) | 5100 | 5965 | 6040 | 5595 |
| Survulcanisation 150 min. à 150°C (N/50 mm) | 3380 | 5515 | 5711 | 5111 |
| Perte (%) | 33,7 | 7,5 | 5,4 | 8,7 |

## Revendications

1. Utilisation de résines novolaques susceptibles d'être obtenues par condensation (A) d'un composé aromatique renfermant au moins deux groupes hydroxyles et (B) d'un diène non conjugué dans un rapport molaire (A)/(B) compris entre 0,7 et 1,75 en présence d'un catalyseur acide, lesdites résines présentant une teneur en composé aromatique (A) libre inférieure à 5 % en poids, dont la teneur en composé aromatique libre est de préférence inférieure à 1 % en poids, en tant qu'agent d"'adhérisation" du caoutchouc sur un matériau de renforcement.

2. Utilisation de résines selon la revendication 1 dont le point de fusion Bille et Anneau est compris entre 80 et 130°C.

3. Utilisation de résines selon l'une des revendication 1 ou 2 dont le composé aromatique est choisi parmi les composés monoaromatiques et les composés de formule : 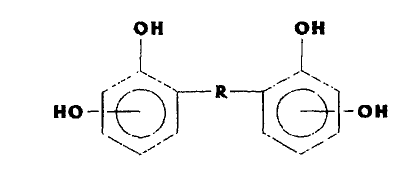 dans laquelle R représente un radical alkylène ou arylalkylène renfermant 1 à 12 atomes de carbone et dont le composé monoaraomatique est le résorcinol, le pyrocatéchol, l'hydroquinone, le pyrogallol ou le phoroglucinol.

4. Utilisation de résines selon l'une des revendications 1 à 3 dont lesquelles le diène est obtenu par réaction de Diels-Alder à partir d'au moins deux diènes conjugués choisis parmi le butadiène, l'isoprène, le pipérylène, le cyclopentadiène et le méthylcyclopentadièneet renferme de préférence de 8 à 25 atomes de carbone.

5. Utilisation selon l'une des revendications 1 à 4, **caractérisée en ce que** le matériau de renforcement est choisi parmi les fibres organiques et les câblés métalliques à base d'acier.

6. Utilisation selon l'une des revendications 1 à 5, **caractérisée en ce que** l'on utilise des fibres à base de nylon, de rayonne, de polyesters, de polyamides et d'aramides et des câblés en acier laitonné ou zingué.

7. Composition à base de caoutchouc, **caractérisée en ce qu'**elle comprend de 0,5 à 20 parties en poids de résines novolaques selon l'une des revendications 1 à 6 pour 100 parties en poids de caoutchouc.

8. Composition selon la revendication 7, **caractérisée en ce qu'**elle comprend de 1 à 10 parties en poids de résines pour 100 parties en poids de caoutchouc.

9. Composition selon l'une des revendications 7 ou 8, **caractérisée en ce que** le caoutchouc est choisi parmi le caoutchouc naturel, les copolymères styrènebutadiène, le polybutadiène, les copolymères butadiène-acrylonitrile et leurs dérivés hydrogénés, le polychloroprène, le caoutchouc butyle ou butyle halogéné, le polyisoprène et les mélanges de deux ou plusieurs de ces composés.

10. Application des compositions selon l'une des revendications 7 à 9 pour l'obtention de pneumatiques et de bandes transporteuses vulcanisés.

## Patentansprüche

1. Verwendung von Novolakharzen, die durch Kondensation (A) einer aromatischen Verbindung, die mindestens zwei Hydroxygruppen aufweist, und (B) eines nicht konjugierten Diens in einem Molverhältnis (A)/(B) im Bereich von 0,7 bis 1,75 in Gegenwart eines Säurekatalysators erhältlich sind, wobei die Harze einen Gehalt an der freien aromatischen Verbindung (A) unter 5 Gew.-% aufweisen, wobei der Gehalt der freien aromatischen Verbindung vorzugsweise unter 1 Gew.-% liegt, als "Haftvermittler" für die Haftung von Kautschuk an einem Verstärkungsmaterial.

2. Verwendung von Harzen nach Anspruch 1, deren Schmelzpunkt nach der Kugel-Ring-Methode im Bereich von 80 bis 130 °C liegt.

3. Verwendung von Harzen nach einem der Ansprüche 1 oder 2, wobei die aromatische Verbindung unter den monoaromatischen Verbindungen und den Verbindungen der Formel: 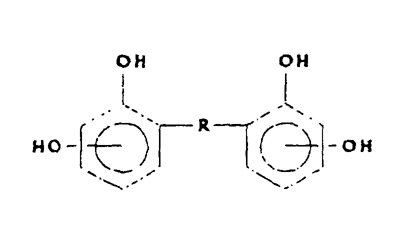 ausgewählt ist, wobei die Gruppe R eine Alkylen- oder Arylalkylengruppe mit 1 bis 12 Kohlenstoffatomen bedeutet und wobei es sich bei der monoaromatischen Verbindung um Resorcin, Brenzcatechin, Hydrochinon, Pyrogallol oder Phloroglucin handelt.

4. Verwendung von Harzen nach einem der Ansprüche 1 bis 3, wobei das Dien durch Diels-Alder-Reaktion ausgehend von mindestens zwei konjugierten Dienen hergestellt ist, die unter Butadien, Isopren, Piperylen, Cyclopentadien und Methylcyclopentadien ausgewählt sind, und vorzugsweise 8 bis 25 Kohlenstoffatome enthält.

5. Verwendung nach einem der Ansprüche 1 bis 4, **dadurch gekennzeichnet, daß** das Verstärkungsmaterial unter den organischen Fasern und Metalldrähten auf Stahlbasis ausgewählt ist.

6. Verwendung nach einem der Ansprüche 1 bis 5, **dadurch gekennzeichnet, daß** Fasern auf der Basis von Nylon, Reyon, Polyestern, Polyamiden und Aramiden und vermessingte oder verzinkte Stahldrähte verwendet werden.

7. Zusammensetzung auf Kautschukbasis, **dadurch gekennzeichnet, daß** sie 0,5 bis 20 Gewichtsteile Novolakharze nach einem der Ansprüche 1 bis 6 auf 100 Gewichtsteile Kautschuk enthält.

8. Zusammensetzung nach Anspruch 7, **dadurch gekennzeichnet, daß** sie 1 bis 10 Gewichtsteile Harze auf 100 Gewichtsteile Kautschuk enthält.

9. Zusammensetzung nach einem der Ansprüche 7 oder 8, **dadurch gekennzeichnet, daß** der Kautschuk unter Naturkautschuk, Styrol/Butadien-Copolymeren, Polybutadien, Butadien/Acrylnitril-Copolymeren und deren hydrierten Derivaten, Polychloropren, Butylkautschuk oder halogenierten Butylkautschuk, Polyisopren und Gemischen aus zwei oder mehreren dieser Verbindungen ausgewählt ist.

10. Verwendung von Zusammensetzungen nach einem der Ansprüche 7 bis 9 zur Herstellung von Luftreifen und vulkanisierten Förderbändern.

## Claims

1. Use of Novolac resins that can be obtained by condensation (A) of an aromatic compound containing at least two hydroxyl groups and (B) of an unconjugated diene in an (A)/(B) molar ratio of between 0.7 and 1.75 in the presence of an acidic catalyst, the said resins having a content of free aromatic compound (A) lower than 5% by weight, the free aromatic compound content of which is preferably lower than 1% by weight, as agent for "promoting adhesion" of rubber to a reinforcing material.

2. Use of resins according to Claim 1, the ring-and-ball melting point of which is between 80 and 130°C.

3. Use of resins according to either of Claims 1 and 2, the aromatic compound of which is chosen from monoaromatic compounds and the compounds of formula: 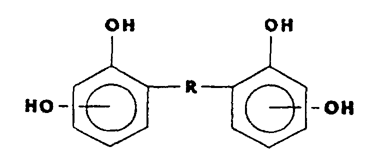 in which R denotes an alkylene or arylalkylene radical containing 1 to 12 carbon atoms and the monoaromatic compound of which is resorcinol, pyrocatechol, hydroquinone, pyrogallol or phloroglucinol.

4. Use of resins according to one of Claims 1 to 3, the diene of which is obtained by a Diels-Alder reaction from at least two conjugated dienes chosen from butadiene, isoprene, piperylene, cyclopentadiene and methylcyclopentadiene and preferably contains from 8 to 25 carbon atoms.

5. Use according to one of Claims 1 to 4, **characterized in that** the reinforcing material is chosen from organic fibres and steel-based metal cords.

6. Use according to one of Claims 1 to 5, **characterized in that** nylon-, rayon-, polyester-, polyamide- and aramid-based fibres and brass- or zinc-plated steel cords are employed.

7. Rubber-based composition, **characterized in that** it comprises from 0.5 to 20 parts by weight of novolac resins according to one of Claims 1 to 6 per 100 parts by weight of rubber.

8. Composition according to Claim 7, **characterized in that** it comprises from 1 to 10 parts by weight of resins per 100 parts by weight of rubber.

9. Composition according to either of Claims 7 and 8, **characterized in that** the rubber is chosen from natural rubber, styrene-butadiene copolymers, polybutadiene, butadiene-acrylonitrile copolymers and their hydrogenated derivatives, polychloroprene, butyl or halogenated butyl rubber, polyisoprene and blends of two or more of these compounds.

10. Application of the compositions according to one of Claims 7 to 9 for obtaining vulcanized tyres and conveyor belts.
